# EUROPEAN PATENT APPLICATION

(11) **EP 4 847 807 A1**
(43) Date of publication of application: **02.12.2026**
(21) Application number: 25760823.2
(22) Date of filing: 20.02.2025
(51) Int. Cl.: F16K 1/02

(54) **STOP VALVE**

(30) Priority: 26.02.2024 CN 202420354083 U; 26.06.2024 CN 202421483038 U
(71) Applicant: Zhejiang Dunan Artificial Environment Co., Ltd., Shaoxing, Zhejiang 311835 (CN)
(72) Inventor: HE, Shanjun, Shaoxing, Zhejiang 311835 (CN); FENG, Guanghua, Shaoxing, Zhejiang 311835 (CN); ZHOU, Feng, Shaoxing, Zhejiang 311835 (CN); FENG, Jianjiang, Shaoxing, Zhejiang 311835 (CN); SHOU, Jie, Shaoxing, Zhejiang 311835 (CN)
(74) Representative: Petraz, Gilberto Luigi
(86) International application number: PCT/CN2025/078188
(87) International publication number: WO 2025/180281

(57) **Abstract**

A stop valve (100) is provided. The stop valve includes a valve body (10), a valve seat (20) and a valve core (30), wherein a channel for flow of a medium is formed in the valve body (10); the valve seat (20) is disposed in the valve body (10), the valve seat (20) is provided with a valve cavity (21), the valve cavity (21) being provided with a valve port (213) in communication with the channel; the valve core (30) is disposed in the valve body (10), and at least part of the valve core (30) can extend into the valve seat (20) and move closer to or away from the valve port (213); a threaded part (222) is arranged in the valve seat (20), and the peripheral side of the valve core (30) is provided with a screw thread matching the threaded part (222), the threaded part (222) extending from the valve port (213) towards the valve core (30). In the stop valve, during the movement of the valve core, misalignment of the valve core can be prevented.

## Description

### CROSS-REFERENCE TO RELATED APPLICATIONS

This application claims priority to Chinese patent application No. 202420354083.3, filed on February 26, 2024 and titled "STOP VALVE", and Chinese patent application No. 202421483038.4, filed on June 26, 2024 and titled "STOP VALVE". The contents of the above identified applications are hereby incorporated herein in their entireties by reference.

### FIELD

The present application relates to the field of refrigeration, in particular, to a stop valve.

### BACKGROUND

Stop valves are widely used in piping systems of refrigeration systems to control the flow of medium through the piping.

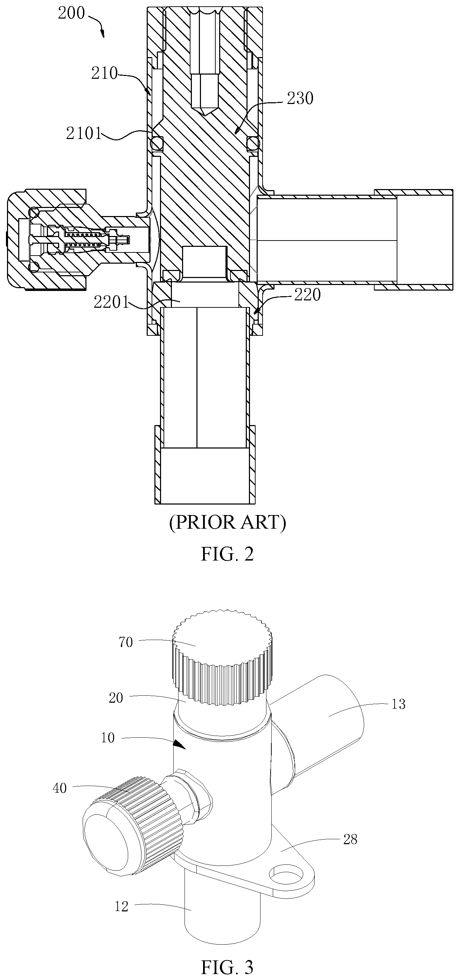

In the related art, a stainless steel stop valve generally includes a valve body and a valve core. The valve core is installed in the valve body. An external thread is provided at a top end of the valve core, and an internal thread is provided in the valve body to fit with the external thread of the valve core, so that the valve core can move in the valve body. Referring to FIG. 2, which is a cross-sectional view of a stop valve of the related art, a threaded part is formed on the valve body, and the threaded part engages with the valve core in a threaded fit. However, since the threaded part is spaced away from the valve port to be sealed by the valve core, the valve core is prone to misalignment during its movement toward the valve port, resulting in a gap frequently existing after the valve core abuts against the valve port. In addition, the valve body and the valve seat cannot meet concentric and coaxial requirements, which in turn causes problems such as poor sealing and medium leakage.

### SUMMARY

In view of above, the present application provides a stop valve to solve the technical problems above.

A stop valve, which includes a valve body, wherein a channel is formed in the valve body, and the channel is configured for a medium to flow; a valve seat, wherein the valve seat is disposed in the valve body and connected to an inner wall of the channel formed in the valve body, the valve seat is provided with a valve cavity, and the valve cavity is provided with a valve port in communication with the channel; and a valve core disposed in the valve body, wherein at least part of the valve core is located in the valve seat and movable in the valve cavity. The valve seat is provided with a threaded part, a peripheral side of the valve core is provided with a screw thread matching with the threaded part, the threaded part extends from the valve port towards the valve core, and the at least a part of the valve core located in the valve seat is in threaded engagement with the threaded part.

In some embodiments, valve core includes a threaded section and a stop section connected with each other; and the threaded section extends into the valve cavity and is connected to the threaded part of the valve seat, and a peripheral side of the stop section circumferentially abuts against an inner wall of the valve body or an inner wall of the valve seat.

In some embodiments, the valve cavity includes a mounting cavity, a threaded cavity and a valve port, and the mounting cavity, the threaded cavity and the valve port are in communication with each other. The threaded cavity is formed by an inner wall of the threaded part, and the threaded cavity is located between the mounting cavity and the valve port. The mounting cavity, the threaded cavity and the valve port are coaxially and concentrically provided, the threaded section is in threaded engagement with a cavity wall of the threaded cavity, and the stop section is located in the mounting cavity and slidably connected to a cavity wall of the mounting cavity.

In some embodiments, the valve body is provided with a mounting hole, an end of the valve seat extends into the valve body via the mounting hole, and an other end of the valve body is located outside the valve body.

In some embodiments, along an axis of the valve body, the mounting hole extends along a direction away from the mounting hole to define a protrusion portion, and the valve seat is fixed to the protrusion portion. A first solder is provided on the protrusion portion, and a part of the solder is in contact with the valve seat.

In some embodiments, the valve cavity includes a threaded cavity and the valve port in communication with each other, the threaded cavity and the valve port are coaxially and concentrically provided, and the threaded cavity is formed by an inner wall of the threaded part. Along a direction in which the valve core moves, the valve body is provided with a mating cavity. The threaded section threadedly fits with a cavity wall of the threaded cavity, and the stop section locates in the mating cavity and is slidably connected to a cavity wall of the mating cavity. A diameter of the stop section is greater than a diameter of the threaded section. A sealing groove is provided on a peripheral side of the stop section, a sealing ring is embedded in the sealing groove, and a peripheral side of the sealing ring abuts against the inner wall of the valve body or the inner wall of the valve seat.

In some embodiments, a circumferential edge of an end of the threaded section adjacent to the valve port is provided with a pyramidal surface, and the pyramidal surface abuts against the valve port.

In some embodiments, at an end of the valve seat provided with the valve port, an inner wall of the valve seat protrudes inwards and forms a step, and the valve core abuts against the step.

In some embodiments, the stop valve further includes a sealing end cap, the sealing end cap is provided at an end of the valve body away from the valve port, and at least a part of an external surface of the sealing end cap is in sealing engagement with an inner wall of the valve body or an inner wall of the valve cavity.

In some embodiments, the stop valve further includes a dust cap. The dust cap is provided with a screw bolt, the sealing end cap is provided with a screw hole, the screw bolt extends into the screw hole and is threadedly connected to the screw hole. In some embodiments, the screw hole is provided on an axis of the sealing end cap, an end surface of the valve core away from the valve port is provided with a boss, the boss and the screw hole are coaxially provided, and the boss abuts against an inner surface of the screw hole.

In some embodiments, along a first direction, the valve seat is provided with a first opening. The first opening is in communication with the valve port, a valve cavity is formed between the first opening and the valve port, and the valve cavity is configured for allowing the valve core to move. The valve core is mounted in the valve cavity through the first opening. Along a second direction, the valve seat is provided with a communication cavity, the communication cavity extends through two ends of the valve seat along the second direction, and is in communication with the valve cavity. The first direction and the second direction are angled relative to each other , and the first direction is the same as a direction along which the valve core moves.

In some embodiments, along the second direction, the valve body is provided with a communication port, an edge of the communication port bends towards the first direction to define a flange, the stop valve further includes a second connecting pipe, and the second connecting pipe is connected to an inner wall of the flange and in communication with the channel.

In some embodiments, an end of second connecting pipe adjacent to the valve body extends into the valve body and abuts against a peripheral side of the valve seat. In some embodiments, the stop valve further includes a third solder, the third solder is provided on the flange and in contact with the second connecting pipe, and the third solder is configured for welding the flange with the second connecting pipe.

In some embodiments, a peripheral side of an end of the valve seat away from valve core is provided with a second ring-shaped groove, and a block is pressed over a groove opening of the second ring-shaped groove. A groove wall of the second ring-shaped groove, the valve body and the block surrounds to define a chamber. A fifth solder is provided in the chamber. The block is connected to the valve body by welding. The stop valve further includes a first connecting pipe, a side of the valve seat adjacent to the valve port is provided with a connecting port, and the first connecting pipe extends into the valve seat via the connecting port. A peripheral wall of an end of the valve seat adjacent to the connecting port is provided with a first ring-shaped groove, and the block is sleeved on the first ring-shaped groove. The stop valve further includes a second solder, the second soler is provided on the first connecting pipe, and a part of the second solder is in contact with the valve seat and the block.

In some embodiments, along a direction in which the valve core moves, both two ends of the valve seat circumferentially abut against an inner wall of the valve body. In some embodiments, an end of the valve seat adjacent to the valve port circumferentially abuts against the inner wall of the valve body.

Details of one or more embodiments of the present application are presented in the following accompanying drawings and description. Other features, purposes and advantages of present application will become apparent from the specification, the drawings and the claims.

### BRIEF DESCRIPTION OF THE DRAWINGS

In order to better describe and illustrate the embodiments and/or examples of the present application disclosed herein, reference may be made to one or more of the accompanying drawings. The additional details or examples used to describe the accompanying drawings should not be considered a limitation on the scope of any of the disclosed applications, the embodiments and/or examples currently described, and the best mode of these applications as currently understood.
FIG. 1 is a sectional view of a stop valve in an embodiment of the present application.
FIG. 2 is a sectional view of a stop valve in the related art.
FIG. 3 is a structural schematic diagram of a stop valve in the present application.
FIG. 4 is a side view of a stop valve in the present application.
FIG. 5 is a sectional view along A-A line in FIG. 2.
FIG. 6 is a three-dimensional sectional view along A-A line in FIG. 2.
FIG. 7 is a schematic diagram in which the valve seat of FIG. 4 and the valve core of FIG. 4 fit with each other.
FIG. 8 is a structural schematic diagram of a valve seat in the present application.
FIG. 9 is a three-dimensional sectional view of a valve seat in the present application.

In the figures, 100 represents a stop valve; 10 represents a valve body; 1001 represents a mating cavity; 101 represents a mounting hole;102 represents a protrusion portion; 12 represents a first connecting pipe; 13 represents a second connecting pipe; 14 represents a first channel; 15 represents a second channel; 16 represents a communication port; 161 represents a flange; 20 represents a valve seat; 222 represents a threaded part; 201 represents a first ring-shaped groove; 202 represents a second ring-shaped groove; 21 represents a valve cavity; 211 represents a mounting cavity; 212 represents a threaded cavity; 213 represents a valve port; 22 represents a communication cavity; 23 represents a first opening; 24 represents a step; 25 represents a second opening; 26 represents a connecting port; 28 represents a block; 29 represents an opening hole; 30 represents a valve core; 301 represents a threaded section; 302 represents a stop section; 31 represents a top portion; 311 represents a boss; 312 represents a sealing groove; 313 represents a sealing ring; 32 represents a bottom portion;321 represents a pyramidal surface; 40 represents a inflation valve; 501 represents a first solder; 502 represents a second solder; 503 represents a third solder; 504 represents a fourth solder; 505 represents a fifth solder; 60 represents a sealing end cap; 601 represents a screw hole; 70 represents a dust cap; 701 represents a screw bolt; 200 represents a stop valve in the related art; 210 represents a valve body; 2101 represents a threaded part; 220 represents a valve seat; 2201 represents a valve port; 230 represents a valve core.

### DETAILED DESCRIPTION

In order that the foregoing purposes, features and advantages of the present application may be made more apparent and understandable, specific embodiments of the present application are described in detail below in conjunction with the accompanying drawings. Many specific details are set forth in the following description to facilitate a full understanding of the present application. However, the present application is capable of being implemented in many other ways different from those described herein, and those skilled in the art may make similar improvements without violating the connotations of the present application, and thus the present application is not limited by the specific embodiments disclosed below.

It is noted that when a component is said to be "fixed to" or "disposed on" another component, it may be directly on the other component or there may be a centred component. When a component is said to be "connected" to another component, it may be directly connected to the other component or there may be both centred components. The terms "vertical", "horizontal", "up", "down", "left", "right" and similar expressions used in the specification of the present application are for illustrative purposes only and are not meant to be exclusive.

Furthermore, the terms "first", "second" are used for descriptive purposes only and are not to be understood as indicating or implying relative importance or implicitly specifying the number of technical features indicated. Thus, a feature formed with the terms "first", "second" may include at least one such feature, either explicitly or implicitly. In the description of the present application, "plurality" means at least two, e.g., two, three, etc., unless otherwise expressly and specifically limited.

In the present application, unless otherwise expressly specified and limited, the first feature "on" or "under" the second feature may be that the first feature is in direct contact with the second feature, or that the first feature is in indirect contact with the second feature through an intermediate medium. Furthermore, the first feature being "above", "on" or "upon" the second feature may mean that the first feature is directly above or diagonally above the second feature, or it may simply mean that the first feature is horizontally higher than the second feature. The first feature being "below", "under" or "beneath" the second feature may be that the first feature is directly below or diagonally below the second feature, or it may simply mean that the first feature is horizontally smaller than the second feature.

Unless otherwise defined, all technical and scientific terms used in the specification of the present application have the same meaning as commonly understood by those skilled in the art to which the present application belongs. Terms used in the specification of the present application are used only for the purpose of describing specific embodiments and are not intended to limit the present application. The term "and/or" as used in the specification of the present application includes any and all combinations of one or more of the relevant listed items.

Referring to FIG. 2, FIG. 2 is a sectional view of a stop valve in the related art, which generally includes a valve body 210 in the related art, a valve seat 220 in the related art and a valve core 230 in the related art. In the related art, the valve seat 220 is disposed on the valve body 210, a threaded part 2101 is provided on the valve body 210 and is threadedly fits with the valve core 230 in the related art via the threaded part 2101. However, in the related art, a distance between the threaded part 2101 and the valve port 2201, which is provided on the valve seat 220 and configured to be sealed by the valve core 230, is relatively long. Thus, in the related art, the valve core 230 in the related art is prone to misalignment during movement toward the valve port 2201 in the related art, resulting in a gap frequently existing after the valve core 230 in the related art abuts against the valve port 2201 in the related art, which in turn causes problems such as poor sealing and medium leakage.

In view of above, the present application provides a stop valve 100 configured in a piping system of a refrigeration system. The stop valve 100 can provide full-stroke guidance for the movement of the valve core 30, thereby preventing the valve core 30 from being misaligned during movement toward the valve port 212, and improving the concentricity between the valve core 30 and the valve port 213.

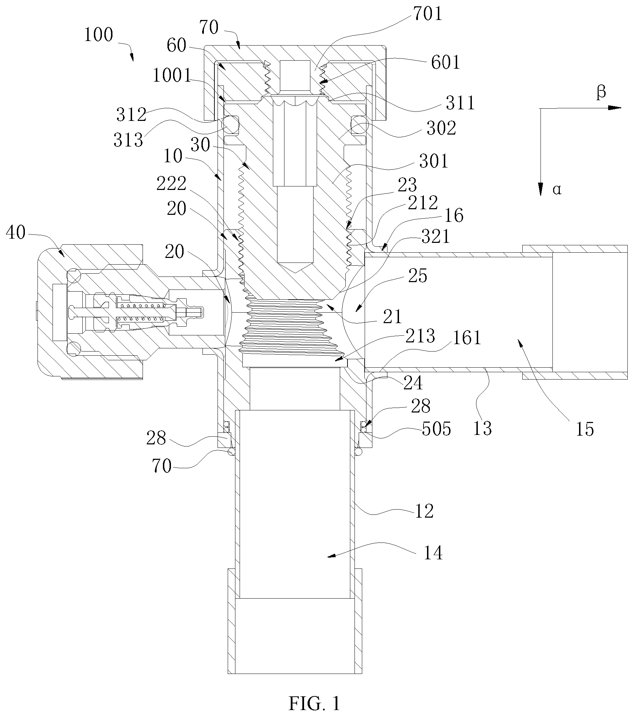

Referring to FIG. 1, a stop valve is provided, which includes a valve body 10 a valve seat 20 and a valve core 30. A channel is formed in the valve body 10, and the channel is configured for a medium to flow. The valve seat 20 is disposed in the valve body 10 and connected to an inner wall of the channel formed in the valve body 10, the valve seat 20 is provided with a valve cavity 21, and the valve cavity 21 is provided with a valve port 213 in communication with the channel. The valve core 30 is disposed in the valve body 10, and at least part of the valve core 30 is located in the valve seat 20 and movable in the valve cavity 21. The valve seat 20 is provided with a threaded part 222, a peripheral side of the valve core 30 is provided with a screw thread fitting with the threaded part 222, the threaded part 222 extends from the valve port 213 towards the valve core 30, and the at least a part of the valve core 30 located in the valve seat 20 engages with the threaded part 222 in a thread fit.

In this way, the valve seat 20 is provided with a valve port 213, and the valve port 213 is in communication with the channel in the valve body 10, so that the medium can flow in the stop valve 100 from the valve port 213. Therefore, when the valve core 30 moves toward the valve port 213 and seals the valve port 213, the stop valve 100 can be closed; and when the valve core 30 moves away from the valve port 213 to open the valve port 213, the stop valve 100 can be opened. At least part of the valve core 30 can extend into the valve seat 20, so the valve seat 20 can provide guidance to the valve core 30 extending thereinto. Moreover, the valve seat 20 is provided with a threaded part 222, and the periphery side of the valve core 30 is provided with threads, so that the valve core 30 can threadedly fit with the threaded part 222, thereby moving along the extension direction of the threaded part 222, and the threaded part 222 extends from the valve port 213 toward the valve core 30. That is, for the valve core 30, the threaded part 222 extends from an end surface of the valve core 30 inserting into the valve seat 20 to the valve port 213. Therefore, during the movement of the valve core 30 toward the valve port 213, the threaded part 222 is always in threaded engagement with the valve core 30 and guides the movement direction thereof, preventing misalignment during the movement, so that the end surface of the valve core 30 adjacent to the valve port 213 can stably abut against the valve port 213, improving the concentricity between the valve core 30 and the valve port 213, thereby enhancing sealing performance and avoiding problems such as medium leakage.

In some embodiments, valve core 30 can include a threaded section 301 and a stop section 302 connected with each other. The threaded section 301 can extend into the valve cavity 21 and can be connected to the threaded part 222 of the valve seat 20, and a peripheral side of the stop section 302 can circumferentially abut against an inner wall of the valve body 10 or an inner wall of the valve seat 20.

Referring to FIG. 1, in some embodiments, the peripheral side of the stop section 302 can abut against the inner wall of the valve body 10, and the threaded section 301 can extend into the valve seat 20. The valve cavity 21 can include a threaded cavity 212 and a valve port 213 in communication with each other, the threaded cavity 212 and the valve port 213 can be concentrically and coaxially provided, and an inner wall of the threaded part 222 can define the threaded cavity 212. Along a direction in which the valve core 30 moves, the valve body 10 can be provided with a mating cavity 1001. The threaded section 301 can threadedly fit with a cavity wall of the threaded cavity 212, and the stop section 302 can locate in the mating cavity 1001 and can be slidably connected to a cavity wall of the mating cavity 1001.

It can be understood that in the present embodiment, along the direction in which the valve core 30 moves, only an end of the valve seat 20 adjacent to the valve port 213 can circumferentially abut against an inner wall of the valve body 10.

Furthermore, a diameter of the stop section 302 can be greater than a diameter of the threaded section 301. During movement of the threaded section 301 towards the valve port 213, the stop section 302 can abut against the valve seat 20. In this way, during movement of the valve core 30, the valve core 30 can be guided by the inner wall of the valve body 10 via fitting between the stop section 302 and the inner wall of the valve body 10. In addition, since the peripheral side of the stop section 302 abuts against the inner wall of the valve body 10, sealing performance between the valve core 30 and the valve body 10 can be ensured, and leakage of the medium from the valve core 30 can be avoided. Since the threaded section 301 extends into the valve seat 20 and fits with the threaded part 222, moving direction of the valve core 30 can be guided by the threaded part 222.

A sealing groove 312 can be provided on a peripheral side of the stop section 302, a sealing ring 313 can be embedded in the sealing groove 312, and a peripheral side of the sealing ring 313 can abut against the inner wall of the valve body 10. In this way, during movement of the valve core 30, the sealing performance between the valve core 30 and the valve body 10 can be improved.

In some embodiments, a circumferential edge of an end of the threaded section 301 adjacent to the valve port 213 can be provided with a pyramidal surface 321, and the pyramidal surface 321 can abut against the valve port 213. In this way, since the pyramidal surface 321 is inclined, the pyramidal surface 321 can fit with the valve port 213 more tightly, and a gap is not easily formed, thereby facilitating formation of a rigidit8y seal between the valve core 30 and the valve port 213.

In some embodiments, at an end of the valve seat 20 provided with the valve port 213, an inner wall of the valve seat 20 can protrude inwards and form a step 24, and the valve core 30 can abut against the step 24. Since the step 24 protrudes inwards, a diameter of the step 24 is relatively small, thereby facilitating the step 24 to abut against the valve core 30.

Along a first direction, the valve seat 20 can be provided with a first opening 23. The first opening 23 can be in communication with the valve port 213, a valve cavity 21 can be formed between the first opening 23 and the valve port 213, and the valve cavity 21 can be configured for allowing the valve core 30 to move. The threaded part 222 can be disposed on the inner wall of the valve seat 20, which forms the valve cavity 21. Along a second direction, the valve seat 20 can be provided with a communication cavity 22, the communication cavity 22 can extend through two ends of the valve seat 20 along the second direction. The first direction and the second direction are angled relative to each other. In this way, the valve core 30 can enter the valve cavity 21 in the valve seat 20 through the first opening 23, and the valve core 30 can be in threaded engagement with the threaded part 222 formed on the inner wall of the valve seat 20 forming the valve cavity 21. The communication cavity 22 can be in communication with the valve cavity 21, and the first direction and the second direction are angled relative to each other. In other words, the communication cavity 22 and the valve cavity 21 can be arranged in a staggered manner. The medium flowing into the valve cavity 21 from the valve port 213 can flow into the communication cavity 22, and flowing out from at least one of the two opening of the communication cavity 22 extending through two ends of the valve seat 20. Thus, close and open of the valve core 30 and the valve port 213 can determine whether the medium can flow into the communication cavity 22 and flow to other external connecting pipe lines from the communication cavity 22.

It should be noted that referring to FIG. 1, in the present embodiment, the first direction can be configured as a direction along which the valve core 30 moves, that is, the direction of the axis of the valve body 10; and the second direction can be configured as a direction of an axis of the connecting pipe after the valve body 10 is connected to the connecting pipe.

In the present embodiment, the first direction and the second direction can be arranged at a right angle. In some embodiments, the first direction and the second direction may also form an acute angle or an obtuse angle. Whether the flow cavity 22 is inclined toward or away from the valve port 213 does not affect the realization of the technical effects of the present application.

In some embodiments, the stop valve 100 further includes a first connecting pipe 12, a second connecting pipe 13 and a inflation valve 40. The first connecting pipe 12 can be connected to an end of the valve body 10 adjacent to the valve port 213, and the first connecting pipe 12 can be in communication with the valve port 213, so that the medium can flow into the valve port 213 through the first connecting pipe 12. The second connecting pipe 13 can be connected to the valve body 10, can be coaxial with the communication cavity 22, and can be in communication with the communication cavity 22. The medium can flow from the first connecting pipe 12 into the valve port 213, and then can flow through the valve cavity 21 and the communication cavity 22 into the second connecting pipe 13. Alternatively, the medium can flow from the second connecting pipe 13 into the communication cavity 22 and the valve cavity 21 in the valve seat 20, and can flow out through the valve port 213. The inflation valve 40 can be connected to the valve body 10, can be disposed opposite the second connecting pipe 13, and can be also in communication with the communication cavity 22, so as to supply additional medium into the valve body 10.

In some embodiments, the screw thread of the threaded cavity 212 can extend along the valve port 213 to an end of the valve seat 20 relatively away from the valve port 213. That is, the threaded part 222 can extend from one end of the valve cavity 21 to the other end thereof, i.e., from the top end of the valve cavity 21 to the bottom end thereof. In this way, once the valve core 30 enters the valve cavity 21, it can be in threaded engagement with the threaded part 222 in a threaded fit, and such threaded fit can continue until the valve core 30 abuts against the valve port 213 and stops moving. That is, the threaded part 222 can provide guidance and limiting effects throughout the entire stroke of the movement of the valve core 30 within the valve cavity 21, thereby further ensuring the stability of the movement of the valve core 30, improving the concentricity between the valve core 30 and the valve port 213, and ensuring a tight abutment between the valve core 30 and the valve port 213.

In some embodiments, the threaded part 222 can also be spaced apart from the end of the valve cavity 21 away from the valve port 213 by a certain distance. That is, no internal thread is provided at the end of the valve cavity 21 away from the valve port 213, so as to facilitate entry of the valve core 30 into the valve cavity 21.

Along the first direction, both two ends of the valve seat 20 can circumferentially abut against an inner wall of the valve body. Therefore, both ends of the valve seat 20 can be stably limited by the inner wall of the valve body 10, and the valve seat 20 can be more stably disposed, thereby avoiding the valve seat 20 itself from being displaced, which would otherwise cause displacement of the valve cavity 21 and the valve port 213, and again result in insufficient concentricity between the valve core 30 and the valve port 213.

Along the second direction, the valve body 10 can be provided with a communication port 16, an edge of the communication port 16 can bend towards the first direction to define a flange 161, the stop valve can further include a second connecting pipe 13, and the second connecting pipe 13 can be connected to an inner wall of the flange 161 and in communication with the channel. In addition, an end of second connecting pipe 13 adjacent to the valve body 10 can extend into the valve body 10 and abuts against a peripheral side of the valve seat 20. In this way, the flange can increase the connection area between the valve body 10 and the second connecting pipe 13, thereby enhancing the connection strength. In addition to being limited by the inner wall of the valve body 10, the valve seat 20 can also be abutted by the second connecting pipe 13, and the abutment of the second connecting pipe 13 against the valve seat 20 can prevent the valve seat 20 from extending excessively into the interior of the valve body.

The stop valve 100 can further include a sealing end cap 60 and a dust cap 70. The sealing end cap 60 can be disposed over an end of the valve body 10 away from the valve port 213. The sealing end cap 60 can be provided with a screw hole 601, and the dust cap 70 can be provided with a screw bolt 701 protruding therefrom. The screw bolt 701 can be movably connected to an inner surface of the screw hole 601, so as to connect the sealing end cap 60 and the dust cap 70. In this way, the sealing end cap 60 can seal the channel in the valve body 10 to prevent leakage of the medium in the channel, and the dust cap 70 can be disposed over the outer side of the sealing end cap 60 to prevent external dust from entering. Moreover, since the sealing end cap 60 and the dust cap 70 are connected via the screw hole 601 and the screw bolt 701, the dust cap 70 does not need to be connected by providing internal threads on its inner wall to fit with external threads provided on the outer peripheral side of the sealing end cap 60 or the valve body 10. Instead, the dust cap 70 can be directly disposed over the outer side of the sealing end cap 60 and the valve body 10. Compared with the dust cap 70 provided with threads in the related art, the dust cap 70 in the present application can be made smaller in size and occupies less space.

In some embodiments, the screw hole 601 can be provided on the axis of the sealing end cap 60. A boss 311 can be provided on an end surface of the valve core 30 facing away from the valve port 213, and the boss 311 can abut against the inner surface of the screw hole 601. In this way, the boss 311 can seal with the sealing end cap 60, further enhancing the sealing performance of the stop valve 100. When the boss 311 circumferentially abuts against the inner surface of the screw hole 601, the abutment surface can be approximately in the shape of a circular ring. Therefore, compared with the solution in the related art in which sealing can be achieved between the outer peripheral edge of the end surface of the valve core 30 and the sealing end cap 60, in the present application, the boss 311 can be coaxially arranged with the screw hole 601 and abuts against the inner surface of the screw hole 601. The abutment surface has a shorter circumference and a smaller contact area, so the friction, i.e., the torque, that needs to be overcome when turning the valve core 30 can be relatively small, thereby making operation more convenient.

A peripheral side of an end of the valve seat 20 away from valve core can be provided with a second ring-shaped groove 202, and a block 28 can be pressed over a groove opening of the second ring-shaped groove 202. A groove wall of the second ring-shaped groove 202, the valve body 10 and the block 28 can surround to define a chamber. A fifth solder 505 can be provided in the chamber. Therefore, when the fifth solder 505 is melted by high-temperature heating, it can weld the valve seat 20, the valve body 10 and the block 28 together, resulting in a firm structure and a simple welding process.

Before the welding and assembling process finished, the stop valve 100 can further include a second solder 502. The second solder 502 can be disposed on a side of the block 28 facing away from the second ring-shaped groove 202, and at least a portion of the second solder 502 can be in contact with the valve seat 20, so as to weld the block 28 and the valve seat 20 together.

In some embodiment, the second solder 502 can be disposed on the peripheral side of the first connecting pipe 12 and is in contact with the first connecting pipe 12. During the welding process, the second solder 502 can further weld the first connecting pipe 12 together with the valve seat 20 and the block 28.

Referring to FIGs. 3 to 9, in some embodiments, the valve cavity 21 can include a mounting cavity 211, a threaded cavity 212 and a valve port 213 that can be in communication with one another, with the threaded cavity 212 being located between the mounting cavity 211 and the valve port 213. The valve core 30 can be movably installed in the valve cavity 21. A threaded section 301 of the valve core 30 can be in threaded engagement with a cavity wall of the threaded cavity 212. A stop section 302 of the valve core 30 can be located in the mounting cavity 211 and can be slidably connected with a cavity wall of the mounting cavity 211. As the valve core 30 moves within the valve cavity 21, the valve core 30 can open or close the valve port 213.

It could be understood that along a direction in which the valve core 30 moves, two ends of the valve seat 20 can circumferentially abut against the inner wall of the valve body 10.

In this way, the valve port 213 can be in communication with the channel in the valve body 10, so that the medium can flow through the valve port 213 within the stop valve. Therefore, when the valve core 30 moves to close the valve port 213, the stop valve can be closed; and when the valve core 30 moves away from the valve port 213 to open the valve port 213, the stop valve can be opened. The valve core 30 can be slidably connected with the mounting cavity 211 and can be in engagement with the threaded cavity. That is, during the movement of the valve core 30, both the mounting cavity 211 and the threaded cavity 212 can guide the valve core 30 throughout the entire process. In this way, both the guidance and the threaded positioning of the valve core 30 can be achieved by the valve seat 20, so that the problem of inconsistent concentricity between the valve body 10 and the valve seat 20 affecting the guidance can be avoided. The mounting cavity 211, the threaded cavity 212, and the valve port 213 maintain good concentricity and coaxiality, so that the valve core 30 can be fully urged against and close the valve port 213 during movement, thereby providing a tight seal at the valve port 213 with reliable sealing performance and no leakage.

Moreover, during the movement of the valve core 30 toward the valve port 213, the threaded cavity 212 can be always in threaded engagement with the valve core 30 and guides the movement direction thereof, preventing misalignment during the movement. As a result, the end surface of the valve core 30 adjacent to the valve port 213 can stably abut against the valve port 213, improving the concentricity between the valve core 30 and the valve port 213, further enhancing sealing performance and avoiding problems such as medium leakage.

Furthermore, with the structure described above, the valve body 10 no longer needs to guide the valve core 30, and therefore no longer requires high precision in terms of internal roughness, concentricity, coaxiality or roundness. Even if the valve body 10 has a weld seam, it can still meet the usage requirements, without the need to be weld-free, thereby reducing material costs.

In one embodiment, the mounting cavity 211, the threaded cavity 212 and the valve port 213 can be arranged along a height direction of the valve seat 20, and can be coaxially and concentrically arranged. That is, in the height direction of the valve seat 20, the mounting cavity 211, the threaded cavity 212 and the valve port 213 are sequentially distributed from top to bottom along the axis of the valve cavity 21. Thus, when the valve core 30 moves within the valve seat 20, it always moves along the axis of the valve seat 20, so that positional deviation will not occur during the movement. The concentricity between the valve core 30 and the valve port 213 can be perfectly consistent, ensuring a good sealing effect and preventing leakage.

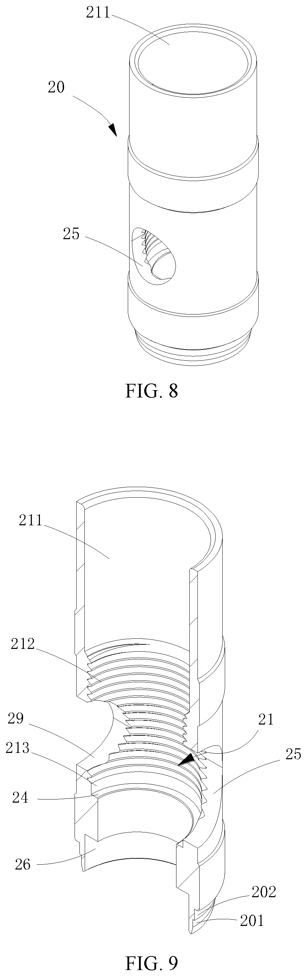

Referring to FIG. 9, the valve seat 20 can be formed by an integral machining process. The integral machining process can be performed by die casting, turning, milling, or the like. In the present embodiment, turning can be adopted, which can be simple to operate and low in cost.

In some embodiments, the mounting cavity 211, the threaded cavity 212, and the valve port 213 can be integrally formed in one machining operation on the cavity wall of the valve cavity 21. The one-time machining can be performed by turning, milling, or the like. In the present embodiment, turning can be adopted, which can be simple to operate and low in cost.

In some embodiments, along the axis of the valve cavity 21, the valve core 30 has a top portion 31 and a bottom portion 32 away from each other. When the valve core 30 moves toward the valve port 213, the bottom portion 32 can be in sealing engagement with the valve port 213 to close the valve port 213. When the valve core 30 moves away from the valve port 213, the bottom portion 32 can be released from sealing engagement with the valve port 213 to open the valve port 213. The sealing engagement herein refers to abutment, and may of course also be insertion or other means.

In the present embodiment, the external thread can be provided at a middle position of the valve core 30. Of course, the external thread may also be provided at a position of the valve core 30 adjacent to the bottom portion 32. In one embodiment, in the height direction of the valve seat 20, the threaded cavity 212 extends from the valve port 213 into the mounting cavity 211. In this way, during the movement of the valve core 30, the external thread can be always threadedly engaged with the threaded cavity 212. That is, the threaded cavity 212 can provide guidance and limiting effects throughout the entire stroke of the movement of the valve core 30 within the valve seat 20, further ensuring the stability of the movement of the valve core 30, improving the concentricity between the valve core 30 and the valve port 213, and ensuring a tight abutment between the valve core 30 and the valve port 213.

In one embodiment, a pyramidal surface 321 can be provided at a circumferential edge of the bottom portion 32, and the pyramidal surface 321 abuts against the valve port 213 to achieve sealing cooperation. Because the pyramidal surface 321 is obliquely arranged, the abutment between the bottom portion 32 and the valve port 213 can be tighter. Even if hard sealing can be adopted, a good sealing effect can still be achieved, and gaps are less likely to occur.

Furthermore, at an end of the valve seat 20 provided with the valve port 213, an inner wall of the valve seat 20 radially protrudes inwards and forms a step 24, and the pyramidal surface 321 abuts against the step 24 to achieve sealing engagement. Since the step 24 protrudes radially inward, the diameter of the step 24 can be smaller than the diameter of the valve port 213. Therefore, when the bottom portion 32 abuts against the valve port 213, the bottom portion 32 will abut against both the valve port 213 and the step 24, resulting in two sealing abutment positions, thereby providing double sealing with good sealing effect. If one seal fails, the other seal can still function, thereby extending the service life.

Furthermore, the stop section 302 can be provided at a position of the valve core 30 adjacent to the top portion 31. The stop section 302 can be provided with a sealing ring, and an external surface of the sealing ring abuts against the cavity wall of the mounting cavity 211 and can slide relative to the inner wall of the mounting cavity 211. That is, the stop section 302 can be slidably connected with the cavity wall of the mounting cavity 211. In some embodiments, other manners may also be adopted, such as the outer surface of the stop section 302 or the cavity wall of the mounting cavity 211 being directly configured as a smooth surface, or a lubricant being provided therebetween. During the movement of the valve core 30, the cavity wall can be always in abutting engagement with the mounting cavity 211, thereby guiding the valve core 30 through the mounting cavity 211.

In some embodiments, the valve body 10 can be provided with a mounting hole 101, and one end of the valve seat 20 extends into the valve body 10 through the mounting hole 101, while an other end of the valve seat 20 can be located outside the valve body 10. In one embodiment, the valve body 10 can be provided with a protruding portion 102. Along the axis of the valve body 10, the mounting hole 101 extends in a direction away from the mounting hole 101 to form the protruding portion 102. The protruding portion 102 can be sleeved over the valve seat 20, and the valve seat 20 can be fixed to the protruding portion 102. The connection between the valve seat 20 and the protruding portion 102 may be achieved by laser welding, solder welding, or the like. In the present application, the valve seat 20 can be connected to the protruding portion 102 by solder welding. The protruding portion 102 can be provided with a first solder 501, and a portion of the first solder 501 can be in contact with the valve seat 20, so that the protruding portion and the valve seat can be fixed together by the solder during the welding process.

In some embodiments, the first solder 501 can be provided at an end of the protruding portion 102 relatively away from the mounting hole 101.

In some embodiments, the stop valve 100 can include a valve body 10, a first connecting pipe 12 and a block 28. The valve body 10 can be sleeved on the valve seat 20. The mounting hole 101 and the protruding portion 102 can be both provided on the valve body 10. The external surface of the valve seat 20 can be welded and fixed to the inner wall of the valve body 10. The first solder 501 can be provided as a solder at the connection position between the valve seat 20 and the end of the protruding portion 102. A connecting port 26 can be provided on a side of the valve seat 20 adjacent to the valve port 213, and the first connecting pipe 12 can be inserted into the connecting port 26. A first ring-shaped groove 201 can be provided on the peripheral wall of the valve seat 20 adjacent to the connecting port 26, and the block 28 can be sleeved on the first ring-shaped groove 201. In one embodiment, the stop valve can further include a second solder 502. The second solder 502 can be provided on the first connecting pipe 12, and a portion of the second solder 502 can be in contact with the valve seat 20 and the block 28. The valve seat 20, the block 28 and the first connecting pipe 12 can be connected together by the second solder 502. In the present embodiment, the lower end surface of the valve seat 20 can be flush with the lower end surface of the block 28, and the second solder 502 can be placed at the flush end surfaces.

Furthermore, a second ring-shaped groove 202 can be provided on the peripheral wall of the valve seat 20 adjacent to the block 28. A fifth solder 505 can be provided in the second ring-shaped groove 202, and a portion of the fifth solder 505 can be in contact with the valve body 10 and the block 28. The valve body 10, the block 28, and the valve seat 20 are connected together by the fifth solder 505. In the present embodiment, the lower end surface of the valve body 10 abuts against the upper end surface of the block 28, that is, the groove wall of the second ring-shaped groove 202, the inner wall of the valve body 10 and the upper end surface of the block 28 can form a cavity therebetween, and the fifth solder 505 can be provided in this cavity.

In one embodiment, the stop valve 100 can further include a second connecting pipe 13. The second connecting pipe 13 can be connected to the valve body 10, and the valve body 10 can be provided with a communication port 16. The communication port 16 can extend in a direction away from the communication port 16 to form a flange 161. The second connecting pipe 13 can extend into the flange 161 and fixed thereto. In some embodiments, the flange 161 can be provided with a third solder 503, and a portion of the third solder 503 can be in contact with the second connecting pipe 13, so as to fix the second connecting pipe 13 and the flange 161 by the third solder 503.

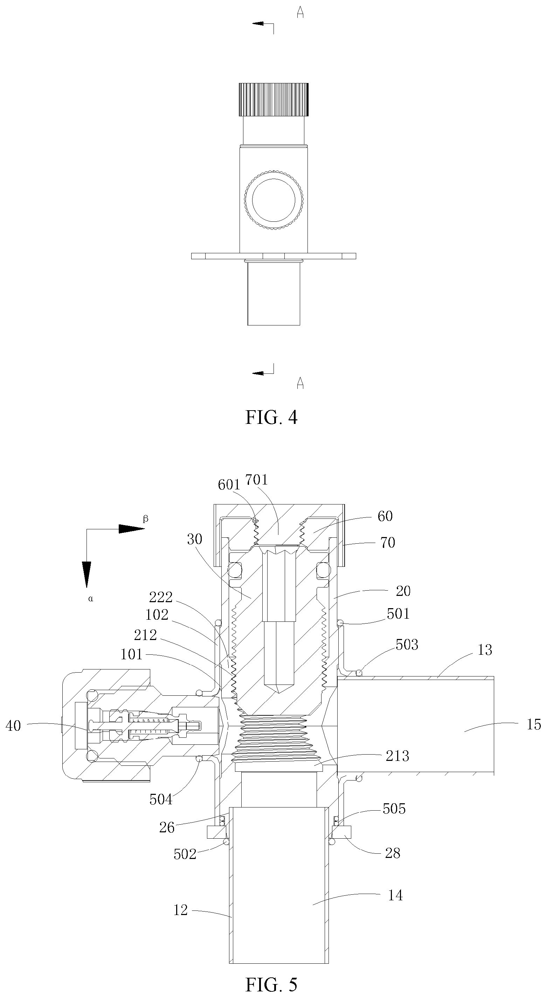

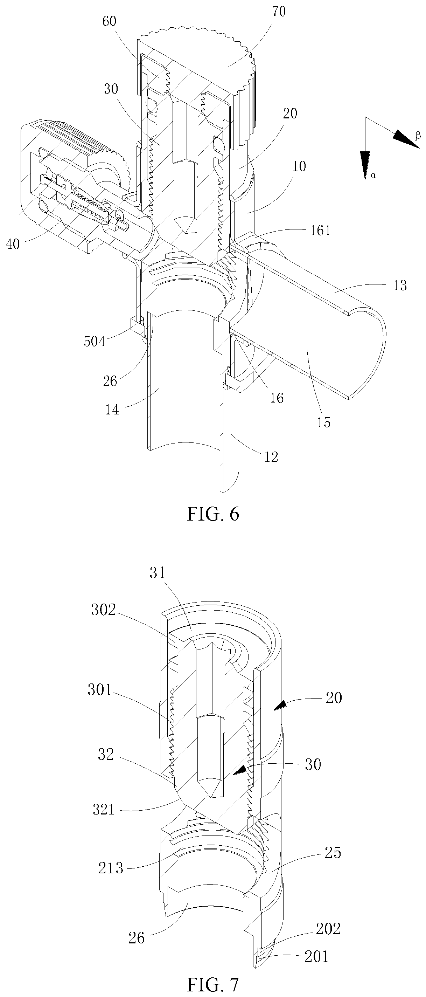

In some embodiments, the first connecting pipe 12 can be arranged along a first direction, and the second connecting pipe 13 can be arranged along a second direction. A channel configured for the medium to flow can be formed in the valve body 10. The channel can include a first channel 14 formed in the first connecting pipe 12 and a second channel 15 formed in the second connecting pipe 13. A second opening 25 can be provided at a position on the valve seat 20 corresponding to the second connecting pipe 13, and the second opening 25 can be in communication with the valve cavity 21. Therefore, the valve cavity 21 can be in communication with the second channel 15 through the second opening 25. That is, the first channel 14 can be in communication with the second channel 15 through the valve port 213 and the valve cavity 21, so that the medium can flow through the first channel 14 in the first connecting pipe 12 into the valve port 213, and after passing through the valve cavity 21, flow into the second channel 15. Thus, the valve core 30 can close the valve port 213 to cut off the communication between the first channel 14 and the second channel 15, i.e., to block the flow of the medium. It should be noted that, referring to FIG. 5 and FIG. 6, in the present embodiment, the first direction can be the direction along which the valve core 30 moves, and can be also a direction along the axis of the valve body 10. The second direction can be a direction along the axis of the second connecting pipe 13 after the valve body 10 is connected to the second connecting pipe 13. In the present embodiment, the first direction and the second direction are arranged at a right angle. In other embodiments, the first direction and the second direction may also form an acute angle or an obtuse angle.

In one embodiment, the stop valve 100 can further include a sealing end cap 60. The sealing end cap 60 can be provided on an end of the valve seat 20 adjacent to the mounting cavity 211, and at least a portion of the external surface of the sealing end cap 60 can be in sealing engagement with the inner wall of the mounting cavity 211. In this way, the sealing end cap 60 can seal the valve body 10 to prevent leakage of the medium in the valve body 10. At the same time, the sealing end cap 60 can also provide a limiting function to the valve core 30, controlling the upward stroke of the valve core 30. In the present embodiment, the sealing end cap 60 can be made of a flexible material such as rubber or resin. The sealing end cap 60 can partially extend into the mounting cavity 211, thereby achieving sealing engagement with the inner wall of the mounting cavity 211. In the present embodiment, the sealing end cap 60 can also fully extend into the mounting cavity 211, and sealing engagement therebetween can also be achieved by other means such as bonding.

In one embodiment, the stop valve further includes a dust cap 70 for preventing dust from entering the valve body. In some embodiments, the dust cap 70 can be provided with a screw bolt 701, and the sealing end cap 60 can be provided with a screw hole 601. The screw bolt 701 can be threadedly connected to the screw hole 601. Thus, the dust cap 70 can be directly threadedly connected to the sealing end cap, and the valve body 10 does not need to be provided with an external thread for threaded engagement with the dust cap 70. The dust cap 70 can be merely sleeved over the valve body 10, and the portion of the dust cap 70 sleeved over the valve body 10 does not need to be provided with an internal thread either, so that the dust cap 70 can be made smaller in size and occupies less space.

In one embodiment, the stop valve further includes an inflation valve 40. The inflation valve 40 can be connected to the other side of the valve body 10 corresponding to the second connecting pipe 13. An opening hole 29 can be provided on the valve seat 20 at a position corresponding to the inflation valve 40, and the valve cavity 21 can be in communication with the inflation valve 40 through the opening hole 29. The structure of the inflation valve 40 can be the same as those in the related art, and can be directly purchased from the market, and thus will not be described in detail herein.

In one embodiment, a fourth solder 504 can be also provided at the connection between the valve body 10 and the inflation valve 40.

The initial state of each of the above-mentioned first solder 501, second solder 502, third solder 503 and fourth solder 504 can be a solder ring, which facilitates the welding processes.

Compared with the related art, in the present application, by providing the threaded part 222 on the valve seat 20 to guide the movement direction of the valve core 30, and providing screw threads on the peripheral side of the valve core 30, the valve core 30 can be in threaded engagement with the threaded part 222, thereby moving along the extending direction of the threaded part 222. The threaded part 222 extends from the valve port 213 toward the valve core 30. That is, for the valve core 30, the threaded part 222 extends from the end surface of the valve core 30 inserted into the valve seat 20 all the way to the valve port 213. Therefore, during the movement of the valve core 30 toward the valve port 213, the threaded part 222 can be always in threaded engagement with the valve core 30 and guides the movement direction thereof, preventing misalignment during the movement, so that the end surface of the valve core 30 adjacent to the valve port 213 can stably abut against the valve port 213, improving the concentricity between the valve core 30 and the valve port 213, thereby enhancing sealing performance and avoiding problems such as medium leakage.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application, and the descriptions are relatively specific and detailed, but they should not be construed as limiting the scope of the present application. It should be understood by those of ordinary skill in the art that various modifications and improvements can be made without departing from the concept of the present application, and all fall within the protection scope of the present application. Therefore, the patent protection of the present application shall be formed by the appended claims.

## Claims

1. A stop valve, **characterized by** comprising
a valve body, wherein a channel is formed in the valve body, and the channel is configured for a medium to flow;
a valve seat, wherein the valve seat is disposed in the valve body and connected to an inner wall of the channel formed in the valve body, the valve seat is provided with a valve cavity, and the valve cavity is provided with a valve port in communication with the channel; and
a valve core disposed in the valve body, wherein at least a part of the valve core is located in the valve seat and movable in the valve cavity,
wherein the valve seat is provided with a threaded part, a peripheral side of the valve core is provided with a screw thread matching with the threaded part, the threaded part extends from the valve port towards the valve core, and the at least part of the valve core located in the valve seat is in threaded engagement with the threaded part.

2. The stop valve of claim 1, wherein the valve core comprises a threaded section and a stop section connected with each other; and
the threaded section extends into the valve cavity and is connected to the threaded part of the valve seat, and a peripheral side of the stop section circumferentially abuts against an inner wall of the valve body or an inner wall of the valve seat.

3. The stop valve of claim 2, wherein the valve cavity comprises a mounting cavity, a threaded cavity and a valve port, the mounting cavity, the threaded cavity and the valve port are in communication with each other, the threaded cavity is formed by an inner wall of the threaded part, the threaded cavity is located between the mounting cavity and the valve port;
the mounting cavity, the threaded cavity and the valve port are coaxially and concentrically provided, the threaded section is in threaded engagement with a cavity wall of the threaded cavity, and the stop section is located in the mounting cavity and slidably connected to a cavity wall of the mounting cavity.

4. The stop valve of claim 3, wherein the valve body is provided with a mounting hole, an end of the valve seat extends into the valve body via the mounting hole, and an other end of the valve body is located outside the valve body.

5. The stop valve of claim 4, wherein along an axis of the valve body, the mounting hole extends along a direction away from the mounting hole to define a protrusion portion, and the valve seat is fixed to the protrusion portion; and a first solder is provided on the protrusion portion, and a part of the solder is in contact with the valve seat.

6. The stop valve of claim 2, wherein the valve cavity comprises a threaded cavity and the valve port in communication with each other, the threaded cavity and the valve port are coaxially and concentrically provided, and the threaded cavity is formed by an inner wall of the threaded part; and along a direction in which the valve core moves, the valve body is provided with a mating cavity,
wherein the threaded section threadedly fits with a cavity wall of the threaded cavity, the stop section locates in the mating cavity and is slidably connected to a cavity wall of the mating cavity; a diameter of the stop section is greater than a diameter of the threaded section; a sealing groove is provided on a peripheral side of the stop section, a sealing ring is embedded in the sealing groove, and a peripheral side of the sealing ring abuts against the inner wall of the valve body or the inner wall of the valve seat.

7. The stop valve of claim 6, wherein a circumferential edge of an end of the threaded section adjacent to the valve port is provided with a pyramidal surface, and the pyramidal surface abuts against the valve port.

8. The stop valve of claim 6, wherein at an end of the valve seat provided with the valve port, an inner wall of the valve seat protrudes inwards and forms a step, and the valve core abuts against the step.

9. The stop valve of claim 1, further comprising a sealing end cap, wherein the sealing end cap is provided at an end of the valve body away from the valve port, and at least a part of an external surface of the sealing end cap is in sealing engagement with an inner wall of the valve body or an inner wall of the valve cavity.

10. The stop valve of claim 9, further comprising a dust cap, wherein the dust cap is provided with a screw bolt, the sealing end cap is provided with a screw hole, and the screw bolt extends into the screw hole and is threadedly connected to the screw hole; and/or,
the screw hole is provided on an axis of the sealing end cap, an end surface of the valve core away from the valve port is provided with a boss, the boss and the screw hole are coaxially provided, and the boss abuts against an inner surface of the screw hole.

11. The stop valve of claim 1, wherein along a first direction, the valve seat is provided with a first opening, the first opening is in communication with the valve port, a valve cavity is formed between the first opening and the valve port, and the valve cavity is configured for allowing the valve core to move, and the valve core is mounted in the valve cavity through the first opening;
along a second direction, the valve seat is provided with a communication cavity, the communication cavity extends through two ends of the valve seat along the second direction, and is in communication with the valve cavity; and
the first direction and the second direction are angled relative to each other, and the first direction is the same as a direction along which the valve core moves.

12. The stop valve of claim 1, wherein along the second direction, the valve body is provided with a communication port, an edge of the communication port bends towards the first direction to define a flange,
the stop valve further comprises a second connecting pipe, and the second connecting pipe is connected to an inner wall of the flange and in communication with the channel.

13. The stop valve of claim 12, wherein an end of second connecting pipe adjacent to the valve body extends into the valve body and abuts against a peripheral side of the valve seat; and/or,
the stop valve further comprises a third solder, the third solder is provided on the flange and in contact with the second connecting pipe, and the third solder is configured for welding the flange with the second connecting pipe.

14. The stop valve of claim 1, wherein a peripheral side of an end of the valve seat away from valve core is provided with a second ring-shaped groove, a block is pressed over a groove opening of the second ring-shaped groove, a groove wall of the second ring-shaped groove, the valve body and the block surrounds to define a chamber, and a fifth solder is provided in the chamber; the block is connected to the valve body by welding; the stop valve further comprises a first connecting pipe, a side of the valve seat adjacent to the valve port is provided with a connecting port, and the first connecting pipe extends into the valve seat via the connecting port; a peripheral wall of an end of the valve seat adjacent to the connecting port is provided with a first ring-shaped groove, and the block is sleeved on the first ring-shaped groove; and the stop valve further comprises a second solder, the second soler is provided on the first connecting pipe, and a part of the second solder is in contact with the valve seat and the block.

15. The stop valve of claim 1, wherein along a direction in which the valve core moves, both two ends of the valve seat circumferentially abut against an inner wall of the valve body; optionally,
an end of the valve seat adjacent to the valve port circumferentially abuts against the inner wall of the valve body.
